# EUROPEAN PATENT APPLICATION

(11) **EP 2 336 006 A1**
(43) Date of publication of application: **22.06.2011**
(21) Application number: 10396003.5
(22) Date of filing: 24.05.2010
(51) Int. Cl.: B62D 21/14, B62D 53/06

(54) **Trailer of a vehicle**

(30) Priority: 18.12.2009 FI 20090492
(71) Applicant: Vak Oy, 21310 Vahto (FI)
(72) Inventor: Virtanen, Lassi, 21310 Vahto (FI)
(74) Representative: Pirhonen, Kari Lennart

(57) **Abstract**

Vehicle trailer (11) which can be coupled to a tractor (10) and to the rear end of which a second trailer (12) can be coupled. The trailer load space (32) can be moved, by means of tracks and a mechanical or hydraulic transfer device (50), in relation to its frame (31) so that, in the driving position, the load space is at the front and while loading or unloading through the rear door (33), the load space is in the rear position.

## Description

### OBJECT OF THE INVENTION

The object of the invention is a vehicle trailer comprised of
- a frame and a load space attached to it for a load,
- first coupling members for coupling the trailer to a tractor and
- second coupling members for coupling a second trailer to said first trailer.

### PRIOR ART

In road haulage there is a need to increase the transport capacity of vehicle combinations within the limits established by road transport legislation. Thus it often happens that one trailer coupled to a tractor is not enough, and yet another trailer is coupled to the rear end of the trailer. In this case the frame of the first trailer coupled to the tractor needs to be extended so that a coupling member can be placed in it for coupling a second trailer to it. The problem with this is that the extension of the first trailer and the coupling member placed in it prevent the trailer load space from being extended all the way to the rear part of the trailer, thus making it substantially more difficult to load and unload the trailer through the rear door of the trailer.

Many attempts have been made to solve the problem described above. According to one solution, the rear part of the trailer and the wheels attached to it are placed in a separate sub-frame which can be moved under the trailer load space for loading the trailer. Such a structure is, however, complicated and heavy. A separate frame can even create a safety risk.

### PURPOSE OF THE INVENTION

The purpose of this invention is to provide a vehicle trailer which overcomes the above-mentioned drawbacks. Further, the purpose of the invention is to provide a simple trailer structure which allows for a second trailer to be attached to it so that the trailer still can be easily loaded and unloaded through its rear door.

### CHARACTERISTICS OF THE INVENTION

The vehicle trailer according to the invention is characterised in
- that the trailer load space is attached to the trailer frame using members, such as tracks or similar, which allow the movement of the trailer load space along the longitudinal axis of the vehicle
- that the trailer has a transfer device for transferring the trailer load space on top of said second coupling member at the rear part of the trailer frame for loading and/or unloading.

### EMBODIMENTS OF THE DEVICE ACCORDING TO THE INVENTION

A preferred embodiment of the device according to the invention is characterised in
- that the trailer load space transfer device comprises one or several hydraulic cylinders,
- that the hydraulic cylinder of the trailer transfer device is supported, directly or by means of a connecting element, on the trailer frame, and
- that the hydraulic cylinder of the transfer device is supported, directly or by means of a connecting element, on the trailer load space so that the trailer load space can be moved in relation to the trailer frame along its longitudinal axis,

Another preferred embodiment of the device according to the invention is characterised in
- that the trailer load space transfer device is comprised of at least two hydraulic cylinders, the cylinder portions of which have been attached to each other, and
- that the piston rod of the first hydraulic cylinder has been attached to the trailer frame and the piston rod of the second hydraulic cylinder has been attached to the trailer load space.

A third preferred embodiment of the device according to the invention is characterised in
- that the trailer load space transfer device is comprised of three hydraulic cylinders, the cylinder portions of which have been attached to each other, and
- that the piston rods of two hydraulic cylinders have been attached to the trailer frame and the piston rod of the third hydraulic cylinder has been attached to the trailer load space.

A fourth preferred embodiment of the device according to the invention is characterised in
- that the trailer load space transfer device comprises a track attached to the load space and a drive wheel to be pressed against the track, and
- that the drive wheel placed in the trailer frame is most preferably rotated by means of a hydraulic motor.

A fifth preferred embodiment of the device according to the invention is characterised in
- that the trailer load space transfer device comprises a toothed bar attached to the load space and a gear wheel arranged in connection with it, and
- that the gear wheel placed in the trailer frame is most preferably rotated by means of a hydraulic motor.

A sixth preferred embodiment of the device according to the invention is characterised in
- that the trailer load space transfer device comprises a wire rope attached to the load space and a pulley attached to it, and
- that the pulley placed in the trailer frame is most preferably rotated by means of a hydraulic motor.

### EXAMPLES OF EMBODIMENT

In the following, the invention is described using examples with reference to the appended drawings, in which

### LIST OF FIGURES

Figure 1 is a side view of the parts of a vehicle combination detached from each other, which are a tractor, a first trailer and a second trailer.
Figure 2 corresponds to Figure 1 and shows the parts of the vehicle combination coupled to each other.
Figure 3 is a side view of the first trailer belonging to the vehicle combination of Figure 1 and the first embodiment of its transfer device.
Figure 4 corresponds to Figure 3 and shows the first trailer, the load space of which has been moved into another position in relation to the frame.
Figure 5 is a top view of the transfer member of the load space of the first trailer of Figures 3 and 4.
Figure 6 corresponds to Figure 3 and shows the first trailer belonging to the vehicle combination and the second embodiment of its transfer device.
Figure 7 corresponds to Figure 3 and shows the first trailer belonging to the vehicle combination and the third embodiment of its transfer device.
Figure 8 corresponds to Figure 3 and shows the first trailer belonging to the vehicle combination and the fourth embodiment of its transfer device

### DESCRIPTION OF THE FIGURES

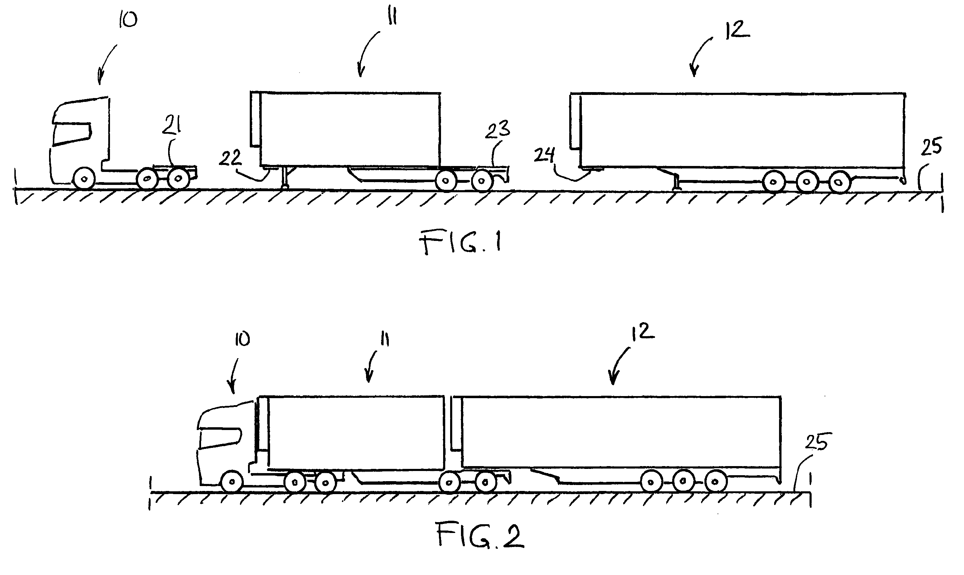

Figure 1 shows the parts of a vehicle combination detached from each other, which are a tractor 10, a first trailer 11 and a second trailer 12. For coupling the tractor 10 to the first trailer 11, the tractor 10 has a coupling member 21 known as such and the first trailer 11 has a corresponding coupling member 22. Also the coupling members 23 and 24 that are used to couple the second trailer 12 to the first trailer 11 are known as such and correspond to the coupling members 21 and 22 of the tractor 10 and the first trailer 11.

Figure 2 shows the parts of the vehicle combination presented in Figure 1, the tractor 10, the first trailer 11 and the second trailer 12, coupled to each other.

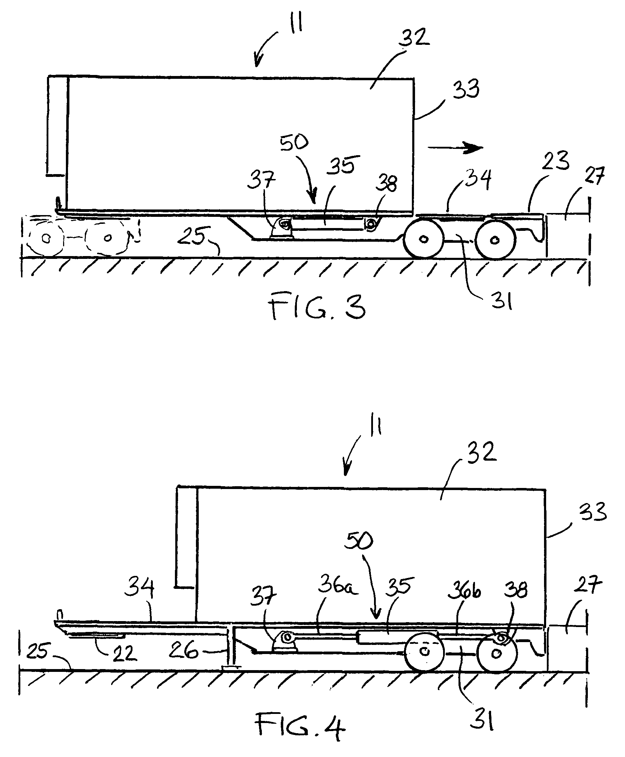

Figure 3 shows the first trailer 11, whereby the load space 32 is on top of the frame 31 of the trailer 11 at its front part, i.e. on the left in Figure 3. The trailer 11 can be left as a separate unit for example on a storage site, whereby the legs 26 located at the front part of the load space 32 are turned to rest on the ground 25. In the situation of Figure 3, the trailer 11 is however still coupled to the tractor 10, part of which is indicated by dotted lines in Figure 3.

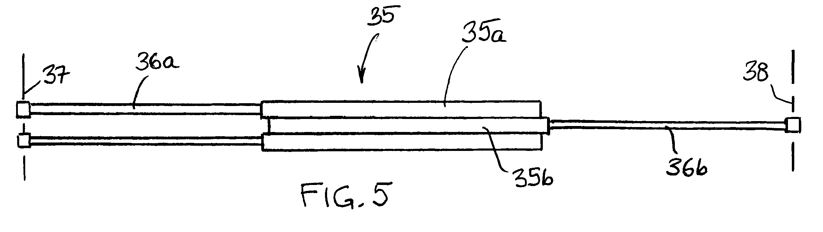

In the situation of Figure 3, the trailer 11 has been driven next to a loading platform 27 so that its frame 31 is almost in contact with the loading platform 27. In this situation, the trailer 11 can however not be loaded or unloaded through its rear door 33, because the load space 32 of the trailer 11 and thus also its rear door 33 are too far away from the loading platform 27 and the coupling member 23 located on top of the frame 31 is between them. According to the invention, the problem is solved by transferring the load space 32 of the trailer 11, along the guide rails 34 arranged in connection with the frame 31 of the trailer 11, to the rear part of the trailer 11 close to the loading platform 27. In the first embodiment shown in Figure 3, the transfer device 50 of the load space 32 of the trailer 11 is comprised of hydraulic cylinders 35 which are shown in more detail in Figure 5. The package of hydraulic cylinders 35 fastened to each other, the piston rod of the first hydraulic cylinder has been attached to the connecting element 37 located in the frame 31 of the trailer 11 and the piston rod of the second hydraulic cylinder has been attached to the connecting element 38 located in the load space 32 of the trailer 11,

Figure 4 shows a situation where the load space 32 of the trailer 11 has been transferred, by means of the hydraulic cylinders 35 belonging to the transfer device 50, to the rear part of the frame 31 of the trailer 11, close to the loading platform 27. The figure shows the piston rods 36a and 36b of the two hydraulic cylinders 35, which have protruded out of their hydraulic cylinders into opposite directions. Thereby the connecting element 38 attached to the load space 32 of the trailer 11 and at the same time the entire load space 32 have moved to the right in Figure 4, so that they are almost in contact with the loading platform 27, whereby the load space 32 of the trailer 11 is easy to load and unload through the rear door 33 of the load space 32.

Figure 5 shows a transfer device 50 of the load space 32 of the trailer 11 according to the first embodiment of the invention, which transfer device is made up of a hydraulic cylinder package 35 comprised of three hydraulic cylinders. In the example shown in Figure 5, the hydraulic cylinder package 35 has three hydraulic cylinders, two of them having their piston rods directed to the left in Figure 5. These piston rods 36a have been attached to the connecting element 37 located in the frame of the trailer 11. Similarly, the piston rod 36b of one hydraulic cylinder has been directed to the right in Figure 5 and attached to the connecting element 38 located in the load space 32 of the trailer 11. In the situation shown in Figure 5, the piston rods 36a and 36b of the hydraulic cylinders 35a and 35b are completely extended, whereby the load space 32 of the trailer 11 is in its extreme rear position shown in Figure 4. Similarly, when the piston rods 36a and 36b of the hydraulic cylinders 35a and 35b are completely retracted, the load space 32 of the trailer 11 is in its extreme front position shown in Figure 3. Even though the transfer device 50 shown in Figure 5 for transferring the load space 32 of the trailer 11 is a three-hydraulic-cylinder package 35, it is obvious that the number of hydraulic cylinders can vary in different applications. Thereby, in some cases, a transfer device 50 comprised of one cylinder is enough to provide the desired operation.

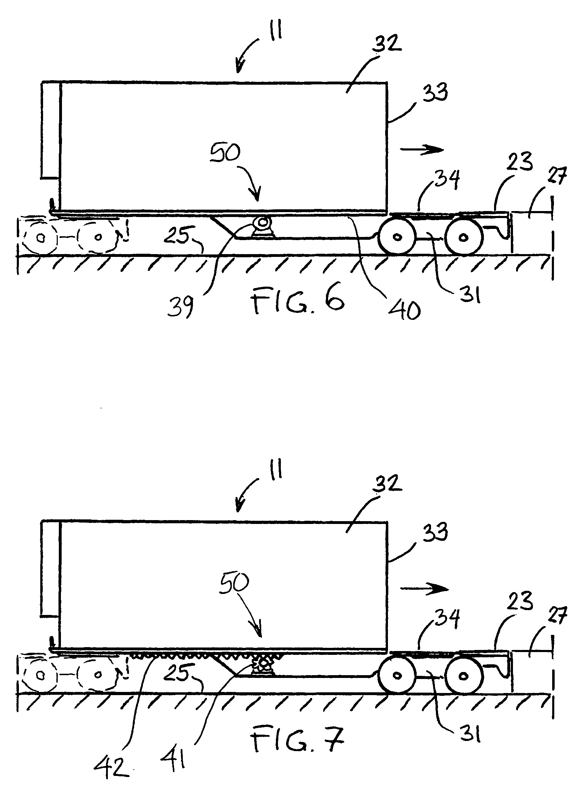

Figure 6 shows the first trailer 11 of a vehicle combination, which has been equipped with the second embodiment of the transfer device 50 of the load space 32. In this embodiment, the transfer device 50 is comprised of a drive wheel 39 located in the frame 31 of the trailer 11, which is pressed against the track 40 located under the trailer 11 when the load space 32 of the trailer 11 needs to be moved. The drive wheel 39 is most preferably rotated, for example, by means of a hydraulic motor or another motor, thus creating the transfer movement of the load space 32 of the trailer 11.

Figure 7 shows the third embodiment of the transfer device 50 of the load space 32 of the first trailer 11 of a vehicle combination. Here the transfer device 50 is comprised of a gear wheel 41 located in the frame 31 of the trailer 11 and a toothed bar 42 attached under the load space 32 of the trailer 11. Rotating the gear wheel 41 for example by means of a hydraulic motor creates the transfer movement of the load space 32 of the trailer 11. According to yet another embodiment, a chain can also be used instead of the toothed bar 42.

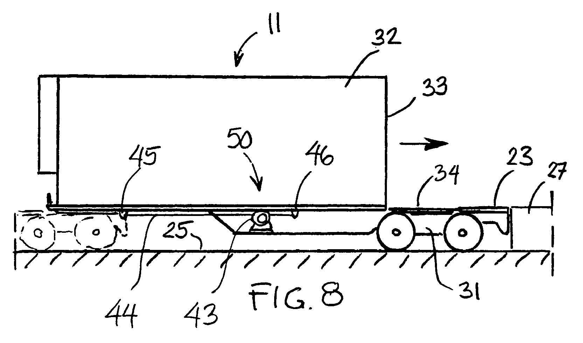

Figure 8 shows the fourth embodiment of the transfer device 50 of the load space 32 of the first trailer 11 of a vehicle combination, wherein a pulley 43 has been placed in the frame 31 of the trailer 11 and a wire rope 44 that is rotated by the pulley 43 has been placed between the fastening elements 45 and 46 under the load space 32 of the trailer 11.

### ADDITIONAL NOTES

It is obvious to a person skilled in the art that the different embodiments of the invention may vary within the scope of the claims presented below.

### LIST OF REFERENCE NUMBERS

- 10: Tractor
- 11: First trailer
- 12: Second trailer
- 21: Coupling member
- 22: Coupling member
- 23: Coupling member
- 24: Coupling member
- 25: Ground
- 26: Leg
- 27: Loading platform
- 31: Trailer frame
- 32: Trailer load space
- 33: Rear door
- 34: Guide rail
- 35: Hydraulic cylinder
- 36: Piston rod
- 37: Trailer frame connecting element
- 38: Trailer load space connecting element
- 39: Drive wheel
- 40: Track
- 41: Gear wheel
- 42: Toothed bar
- 43: Pulley
- 44: Wire rope
- 45: Fastening element
- 46: Fastening element
- 50: Transfer device

## Claims

1. Vehicle trailer (11) comprising
- a frame (31) and a load space (32) attached thereon for a load,
- first coupling members (22) for coupling the trailer (11) to a tractor (10), and
- second coupling members (23) for coupling a second trailer (12) to said first trailer (11),
**characterised in**
- **that** the load space (32) of the trailer (11) is attached to the trailer frame (32) using members (34), such as tracks or similar, which allow the movement of the trailer load space along the longitudinal axis of the vehicle,
- **that** the trailer (11) has a transfer device (50) for transferring the load space (32) of the trailer (11) on top of said second coupling member (23) at the rear part of the trailer frame (31) for loading and/or unloading.

2. Vehicle trailer (11) according to claim 1, **characterised in**
- **that** the transfer device (50) of the load space (32) of the trailer (11) comprises one or several hydraulic cylinders (35),
- **that** the hydraulic cylinder (35) of the transfer device (50) of the trailer (11) is supported, directly or by means of a connecting element (37), on the trailer frame (31), and
- **that** the hydraulic cylinder (35) of the transfer device (50) is supported, directly or by means of a connecting element (38), on the load space (32) of the trailer (11) so that the trailer load space can be moved in relation to the trailer frame along its longitudinal axis.

3. Vehicle trailer (11) according to claim 2, **characterised in**
- **that** the transfer device (50) of the load space (32) of the trailer (11) is comprised of at least two hydraulic cylinders (35a, 35b), the cylinder portions of which have been attached to each other, and
- the piston rod (35a) of the first hydraulic cylinder (35a) has been attached to the frame (31) of the trailer (11) and the piston rod (36b) of the second hydraulic cylinder (35b) has been attached to the load space (32) of the trailer.

4. Vehicle trailer (11) according to claim 2 or 3, **characterised in**
- **that** the transfer device (50) of the load space (32) of the trailer (11) is comprised of three hydraulic cylinders, the cylinder portions of which have been attached to each other, and
- **that** the piston rods (36a) of two hydraulic cylinders (35a) have been attached to the frame (31) of the trailer (11) and the piston rod (36b) of the third hydraulic cylinder (35b) has been attached to the load space (32) of the trailer.

5. Vehicle trailer (11) according to claim 1, **characterised in**
- **that** the transfer device (50) of the load space (32) of the trailer (11) comprises a track (40) attached to the load space and a drive wheel (39) to be pressed against the track, and
- **that** the drive wheel (39) placed in the frame (31) of the trailer (11) is most preferably rotated by means of a hydraulic motor.

6. Vehicle trailer (11) according to claim 1, **characterised in**
- **that** the transfer device (50) of the load space (32) of the trailer (11) comprises a toothed bar (42) attached to the load space and a gearwheel (41) arranged in connection with it, and
- **that** the gear wheel (41) placed in the frame (31) of the trailer (11) is most preferably rotated by means of a hydraulic motor.

7. Vehicle trailer (11) according to claim 1, **characterised in**
- **that** the transfer device (50) of the load space (32) of the trailer (11) comprises a wire rope (44) attached to the load space and a pulley (43) attached to it, and
- **that** the pulley (43) placed in the frame (31) of the trailer (11) is most preferably rotated by means of a hydraulic motor.
